# FASCICULE DE BREVET EUROPEEN

(11) **EP 4 309 190 B1**
(45) Date de publication et mention de la délivrance du brevet: **09.09.2026**
(21) Numéro de dépôt: 22714196.7
(22) Date de dépôt: 14.03.2022
(51) Int. Cl.: G21F 7/005, G21F 3/00, F24F 13/02, F16L 55/02

(54) **TRAVERSÉE DE VENTILATION POUR UNE PAROI RADIO-PROTECTRICE ET LA PAROI RADIO-PROTECTRICE ÉQUIPÉE**
LÜFTUNGSDURCHFÜHRUNG FÜR EINE STRAHLENSCHUTZWAND UND DAMIT AUSGESTATTETE STRAHLENSCHUTZWAND
VENTILATION BUSHING FOR A RADIOPROTECTIVE WALL AND RADIO-PROTECTIVE WALL THUS EQUIPPED

(30) Priorité: 15.03.2021 FR 2102521
(43) Date de publication de la demande: 24.01.2024
(73) Titulaire: Lemer Pax, 44240 La Chapelle-sur-Erdre (FR)
(72) Inventeur: LEMER, Pierre-Marie, 44100 NANTES (FR)
(74) Mandataire: Jacobacci & Partners France
(86) Numéro de dépôt international: PCT/EP2022/056489
(87) Numéro de publication internationale: WO 2022/194753

(56) Documents cités:
- EP-A1- 0 442 791
- DE-C1- 19 623 708
- FR-A1- 3 063 812

## Description

### Domaine technique de l'invention

La présente invention concerne le domaine technique de la protection contre les rayonnements ionisants.

Elle concerne plus particulièrement une traversée de ventilation pour une paroi radio-protectrice assurant une protection contre les rayonnements ionisants tels que les rayonnements gamma ou neutroniques. Elle concerne également une paroi radio-protectrice équipée d'une telle traversée de ventilation.

### Etat de la technique

Les parois des enceintes de confinement ou des locaux blindés dans lesquels on manipule des produits radioactifs ou des matières émettant des rayonnements pénétrants (rayons gamma ou neutrons), ou encore les parois des accélérateurs de particules ou des réacteurs nucléaires, nécessitent parfois la présence de passages d'air pour assurer une ventilation et/ou un équilibre de pressions d'air.

De tels passages d'air, encore appelés « traversées de ventilation », doivent être structurés pour permettre la ventilation recherchée tout en sauvegardant l'homogénéité de radioprotection au travers de la paroi de génie civil.

Certaines traversées de ventilation connues consistent en une structure tubulaire cylindrique au sein de laquelle est rapportée une structure de radioprotection en forme de vis hélicoïdale (voir le document FR-3 063 812).

La structure tubulaire cylindrique, par exemple réalisé en acier inoxydable, traverse la paroi blindée (généralement en béton) ; et la vis hélicoïdale réalisée en un matériau radio-protecteur tel que la fonte, l'acier, l'inox ou le plomb est assemblée par frettage avec la face interne de cette structure tubulaire cylindrique.

Les réalisations connues conviennent bien pour assurer une protection contre les rayons gamma, mais leur efficacité est plus limitée à l'encontre des rayonnements neutroniques.

### Présentation de l'invention

Afin de remédier à l'inconvénient précité de l'état de la technique, la présente invention propose une traversée de ventilation pour une paroi radio-protectrice assurant une protection contre les rayonnements ionisants, laquelle paroi radio-protectrice est destinée à séparer un espace soumis à des rayonnements ionisants, dit espace chaud, et un espace non soumis à des rayonnements ionisants, dit espace froid,
laquelle traversée de ventilation comprend :
- une structure tubulaire comprenant une virole munie de deux extrémités de virole définissant entre elles une longueur de virole et un volume interne de virole,
   l'une desdites deux extrémités de virole étant destinée à déboucher dans ledit espace chaud, et l'autre desdites deux extrémités de virole étant destinée à déboucher dans ledit espace froid, et
- une structure de radioprotection rapportée dans ledit volume interne de virole, laquelle structure de radioprotection est adaptée pour stopper une partie au moins des rayonnements ionisants tout en autorisant une communication aéraulique entre lesdites deux extrémités de virole,
ladite structure de radioprotection comprend une pluralité d'éléments unitaires de radioprotection juxtaposés les uns aux autres, et en contact les uns avec les autres, tout en préservant entre eux des interstices pour le passage d'air, laquelle pluralité d'éléments unitaires de radioprotection s'étend sur le volume d'au moins une partie de ladite longueur de virole, ladite structure tubulaire comprend deux grilles de retenue pour le cloisonnement et le maintien des éléments unitaires de radioprotection juxtaposés dans le volume interne de virole.

La notion « d'éléments unitaires de radioprotection » signifie que Les éléments de radioprotection forment des unités indépendantes les unes des autres.

D'autre part, les éléments unitaires indépendants de radioprotection sont juxtaposés les uns aux autres, c'est-à-dire qu'ils sont regroupés en appui les uns sur les autres (ou autrement dit en contact les uns avec les autres) dans le volume d'au moins une partie de la longueur de virole.

Une telle juxtaposition d'éléments unitaires de radioprotection permet d'obtenir une protection efficace à l'encontre des rayonnements ionisants qu'ils soient de type gamma ou neutroniques.

D'autres caractéristiques non limitatives et avantageuses de la traversée de ventilation conforme à l'invention, prises individuellement ou selon toutes les combinaisons techniquement possibles, sont les suivantes :
- lesdites grilles de retenue peuvent être disposées au niveau des deux extrémités de virole, et lesdits éléments unitaires de radioprotection juxtaposés peuvent occuper la totalité ou approximativement la totalité dudit volume interne de virole ;
- la structure tubulaire peut comprendre deux couronnes support, chacune fixée au niveau de l'une desdites extrémités de virole, et des moyens pour la fixation amovible de chacune desdites grilles de retenue sur l'une desdites couronnes support ;
- la virole de la structure tubulaire peut être non cylindrique comprenant des variations de forme et/ou de dimensions entre lesdites deux extrémités de virole ;
- la virole de la structure tubulaire peut être constituée d'une juxtaposition d'au moins deux tronçons de forme tronconique, de préférence d'une juxtaposition d'au moins trois tronçons de forme tronconique, et encore de préférence d'une juxtaposition d'au moins quatre tronçons de forme tronconique ;
- les éléments unitaires de radioprotection peuvent être tous identiques ou être constitués d'un mélange de plusieurs types d'éléments ;
- certains au moins des éléments unitaires de radioprotection peuvent avoir une forme générale sphérique, ou peuvent s'inscrire dans un volume sphérique, dont le diamètre de sphère est compris entre 5 et 60 mm, de préférence entre 10 et 50 mm ;
- certains au moins des éléments unitaires de radioprotection peuvent se présenter sous la forme générale d'une sphère munie de rainures d'allègement et de passage d'air ;
- lesdites rainures d'allègement et de passage d'air peuvent s'étendre selon différentes orientations sur chaque élément unitaire de radioprotection ;
- certains au moins des éléments unitaires de radioprotection peuvent comporter une pluralité de premières rainures d'allègement orientées selon une première direction, et une pluralité de secondes rainures d'allègement orientées selon une seconde direction, ladite première direction et ladite seconde direction étant perpendiculaires entre elles ;
- certains au moins des éléments unitaires de radioprotection peuvent être de forme non sphérique, munis d'une pluralité de bras s'étendant radialement et régulièrement répartis ;
- les éléments unitaires de radioprotection peuvent être réalisés en matériau neutrophage, apte à absorber les neutrons, par exemple en un matériau fortement hydrogéné, tel que le polyéthylène, une silicone ou une résine polyester, pouvant être chargé au moins d'un composant ignifuge tel que du bore ou de l'hydrate d'aluminium.

La présente invention concerne encore une paroi radio-protectrice séparant un espace soumis à des rayonnements ionisants, dit espace chaud, et un espace non soumis à des rayonnements ionisants, dit espace froid, comprenant une traversée de ventilation telle que définie ci-dessus.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue en perspective d'une traversée de ventilation conforme à l'invention ;
[Fig. 2] montre la traversée de ventilation de la figure 1, avec ses grilles de retenue séparées de la structure tubulaire ;
[Fig. 3] est une vue de face de la traversée de ventilation de la figure 1 ;
[Fig. 4] est une vue en coupe longitudinale de la traversée de ventilation, selon le plan de coupe 4-4 de la figure 3 ;
[Fig. 5] est une vue en perspective d'une première forme de réalisation possible d'un élément unitaire de radioprotection pour la traversée de ventilation selon l'invention ;
[Fig. 6] est une vue en perspective d'une deuxième forme de réalisation possible d'un élément unitaire de radioprotection pour la traversée de ventilation selon l'invention ;
[Fig. 7] est une vue en perspective d'une troisième forme de réalisation possible d'un élément unitaire de radioprotection pour la traversée de ventilation selon l'invention.

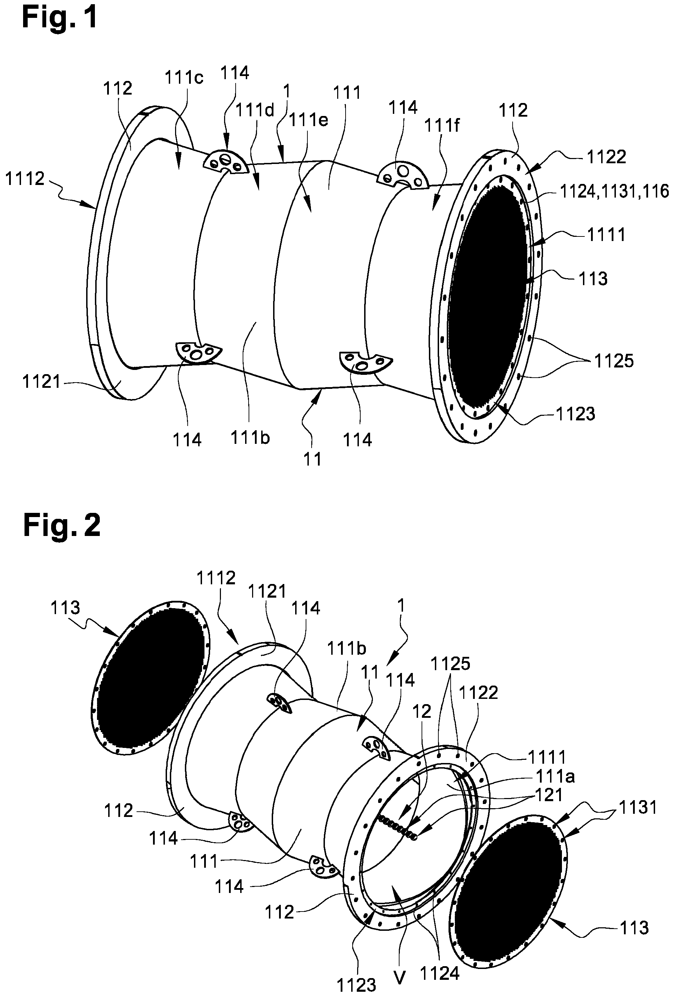

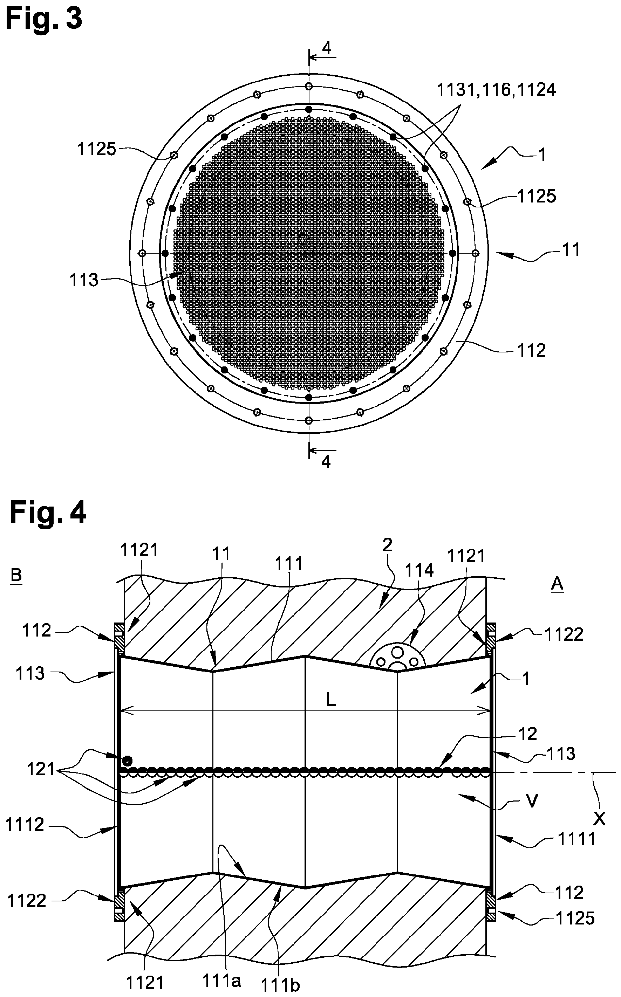

Les figures 1 à 4 illustrent une forme de réalisation d'une traversée de ventilation 1 conforme à l'invention destinée à équiper une paroi radio-protectrice 2 (visible sur la figure 4) qui sépare un espace chaud A soumis à des rayonnements ionisants, et un espace froid B non soumis à des rayonnements ionisants.

La paroi radio-protectrice 2 peut être réalisée en béton, par exemple de 0,45 à 2,2m d'épaisseur selon la protection recherchée.

La traversée de ventilation 1 est adaptée pour permettre une communication aéraulique entre l'espace chaud A et l'espace froid B, tout en sauvegardant l'homogénéité de radioprotection au travers de la paroi 2, à l'encontre des rayonnements ionisants (en particulier les rayons gamma ou les neutrons).

Cette traversée de ventilation 1 comprend une structure tubulaire 11 adaptée pour recevoir et cloisonner une structure de radioprotection 12 qui, selon l'invention, se présente sous la forme d'une juxtaposition d'éléments unitaires de radioprotection 121.

La structure de radioprotection 12 est décrite plus en détails dans la suite de la description. Sur les figures 2 et 4, seuls quelques-uns des éléments unitaires de radioprotection 121 ont été représentés par mesure de clarté des représentations.

La structure tubulaire 11 comprend une virole 111, de forme générale tubulaire, d'axe longitudinal X, délimitée par une surface intérieure 111a, par une surface extérieure 111b, et par deux extrémités de virole 1111 et 1112.

Les deux extrémités de virole 1111 et 1112 définissent entre elles une longueur de virole L, et elles définissent encore, avec la surface intérieure 111a de la virole 111, un volume interne de virole V destiné à recevoir la structure de radioprotection 12.

Cette longueur L de virole peut être assimilée à la longueur de la structure tubulaire 11.

L'une des deux extrémités de virole 1111 est destinée à déboucher dans l'espace chaud A, et l'autre des deux extrémités de virole 1112 est destinée à déboucher dans l'espace froid B.

Comme on peut le voir sur les figures 1 à 4, les deux extrémités de virole 1111 et 1112 sont équipées chacune d'une couronne support 112 qui borde leur périphérie et sur chacune desquelles est fixée de manière amovible une grille de retenue 113.

La virole 111 et les deux grilles de retenue 113 cloisonnent le volume V pour la réception de la structure de radioprotection 12 constituée de la juxtaposition d'éléments unitaires de radioprotection 121.

Les grilles de retenue 113 autorisent le passage d'air, tout comme la juxtaposition d'éléments unitaires de radioprotection 121.

Ces grilles de retenue 113 assurent le maintien en appui les uns contre les autres (ou en contact les uns avec les autres) des d'éléments unitaires de radioprotection 121.

La virole 111 peut être réalisée en tôle d'acier inoxydable, par exemple de 3 à 5mm d'épaisseur. Les deux couronnes support 112 peuvent être réalisées en acier inoxydable ; et les grilles de retenue 113 peuvent être chacune en forme générale de disque en acier inoxydable muni d'ouvertures excepté au niveau de sa bordure périphérique.

Comme on peut le voir sur les figures 1, 2 et 4, la virole 111 est ici réalisée non cylindrique et comprend des variations de forme et/ou de dimensions entre ses deux extrémités de virole 1111 et 1112. Une telle particularité permet d'assurer la radioprotection recherchée au niveau de la zone de transition entre le matériau constitutif de la paroi radio-protectrice 2 et la structure de radioprotection 12 de la traversée de ventilation 1. Plus particulièrement, la virole 111 est conçue de sorte que les rayonnements ionisants rencontrent nécessairement sur leur trajet, soit la totalité de l'épaisseur du matériau constitutif de la paroi radio-protectrice 2, soit la totalité de l'épaisseur de la structure de radioprotection 12 de la traversée de ventilation 1, soit une partie complémentaire des deux épaisseurs précitées.

On obtient ainsi une virole 111 dont la paroi définit des sortes de chicanes dont les génératrices ne sont pas linéaires.

Dans le cas présent, la virole 111 est constituée d'une juxtaposition de quatre tronçons 111c, 111d, 111e, et 111f de forme générale tronconique. Les différents tronçons tronconiques 111c, 111d, 111e, et 111f sont centrés sur l'axe longitudinal X et la pente de chacun de ces tronçons est inversée par rapport à la pente du tronçon juxtaposé.
En variante, la virole 111 peut être constituée d'une juxtaposition de 2 tronçons de forme tronconique., de 3 tronçons de forme tronconique, ou de plus de 4 tronçons de forme tronconique.
Encore en variante, différentes autres formes de virole peuvent être envisagées, par exemple en un seul tronçon.

La longueur L de la virole 111 correspond à l'épaisseur de la paroi radio-protectrice 2 (par exemple de l'ordre de 0,8 à 1,2m) ; sa section transversale est globalement circulaire, son diamètre pouvant être par exemple de l'ordre de 400 à 600mm.

La structure tubulaire 11 comprend ici une pluralité de platines ou d'anneaux de manutention 114 soudés sur la surface extérieure 111b de la virole 111 pour faciliter son déplacement et en particulier sa pose par des moyens de manutention adaptés.

Les deux couronnes support 112 ont un diamètre intérieur qui correspond au diamètre des extrémités de virole 1111 et 1112. Ces deux couronnes support 112 sont fixées par soudage au niveau de chacune des extrémités de virole 1111 et 1112. Par exemple, la bordure intérieure des deux couronnes support 112 est solidarisée par soudage avec la surface extérieure 111b de l'extrémité de virole 1111, 1112 associée.

Les deux couronnes support 112 s'étendent en saillie vers l'extérieur par rapport aux extrémité de virole 1111, 1112, dans un plan perpendiculaire à l'axe longitudinal X de la virole 11.

Comme on peut le voir sur la figure 4, la face intérieure 1121 de chacune des deux couronnes support 112 est destinée à venir se positionner contre la face en regard de la paroi radio-protectrice 2. Et leur face extérieure 1122 (orientée à l'opposé) est destinée à recevoir l'une des grilles de retenue 113.

Plus précisément, la face extérieure 1122 des couronnes support 112 comprend une feuillure circulaire 1123 pour l'accueil de la grille de retenue 113 associée. Chaque grille de retenue 113 est fixée dans sa feuillure circulaire 1123 de manière amovible au moyen de vis de fixation 116. Pour cela, les vis de fixation 116 passent au travers d'orifices 1131 ménagés dans la bordure périphérique des grilles de retenue 113 et dans des orifices borgnes 1124 en correspondance ménagés dans la feuillure circulaire 1123.

Sur la face extérieure 1122 des couronnes support 112, on remarque également la présence d'orifices borgnes 1125 qui peuvent par exemple servir à la fixation de disques de protection ou au raccordement d'éléments standard de ventilation (tuyauterie(s), vanne(s), clapet(s)...).

Conformément à l'invention, la structure de radioprotection 12 comprend une pluralité d'éléments unitaires de radioprotection 121 juxtaposés les uns aux autres tout en préservant entre eux des interstices pour le passage d'air, de sorte à autoriser une communication aéraulique entre les deux extrémités de structure tubulaire, et donc entre les deux côtés de la paroi radio-protectrice 2.

La pluralité d'éléments unitaires de radioprotection 121 juxtaposés s'étend sur le volume d'au moins une partie de la longueur de la structure tubulaire 11, cloisonnée par la virole 111 et les deux grilles de retenue 113.

De préférence, la pluralité d'éléments unitaires de radioprotection 121 juxtaposés s'étend sur toute la longueur L de la virole 111 (et donc de la structure tubulaire 11) et occupe ainsi l'intégralité/la totalité du volume V de la virole 111 (excepté les interstices entre eux).

Dans une variante de réalisation, la pluralité d'éléments unitaires de radioprotection 121 juxtaposés peut s'étendre sur une partie seulement de la longueur L de la structure tubulaire 11, le positionnement et la fixation des grilles de retenue 113 étant adaptés en conséquence.

Dans une même traversée de ventilation 1, les d'éléments unitaires de radioprotection 121 peuvent être tous identiques ; en variante, ils peuvent aussi être constitués d'un mélange de plusieurs types d'éléments unitaires, cela par exemple en fonction de la radioprotection recherchée et/ou du passage d'air recherché.

Les éléments unitaires de radioprotection 121 sont structurés de sorte que lorsqu'ils sont regroupés, en appui les uns sur les autres (ou en contact les uns avec les autres), il persiste entre eux des interstices pour le passage d'air. La forme et la dimension des éléments unitaires de radioprotection 121 sont adaptés pour autoriser un passage d'air calibré, fonction de l'application envisagée.

Les éléments unitaires de radioprotection 121 utilisés pour former la structure de radioprotection 12 de la traversée de ventilation 1 conforme à l'invention, se présentent avantageusement sous une forme générale sphérique, ou s'inscrivent dans un volume sphérique, dont le diamètre de sphère est compris entre 5 et 60 mm, de préférence entre 10 et 50 mm.

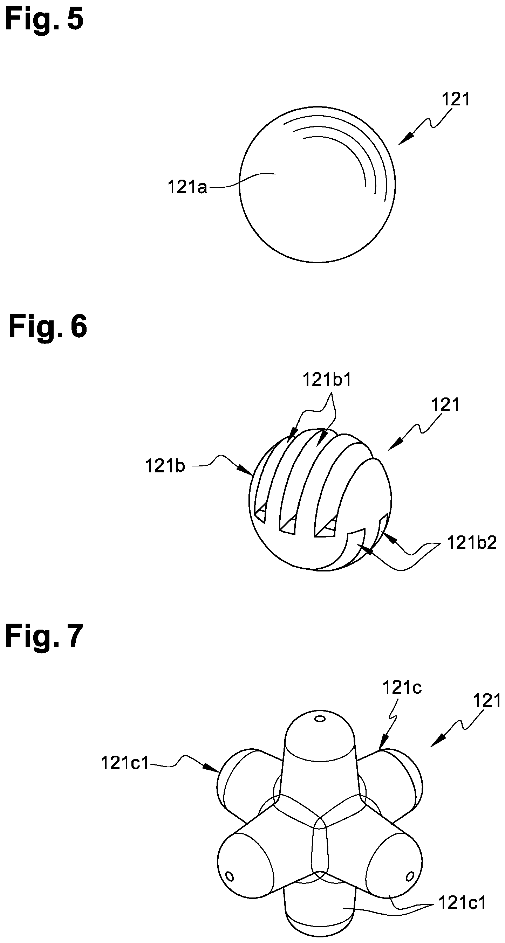

Les figures 5, 6 et 7 illustrent trois types d'éléments unitaires de radioprotection 121 susceptibles d'être utilisés (seuls ou en combinaison) pour former la structure de radioprotection 12 de la traversée de ventilation 1 conforme à l'invention.

L'élément unitaire de radioprotection 121a illustré sur la figure 5 se présente sous la forme d'une simple sphère. Ici la sphère 121a est pleine et homogène. Comme précisé ci-dessus, le diamètre de cette sphère 121a est avantageusement compris entre 5 et 60mm, de préférence entre 10 et 50mm (par exemple son diamètre est compris entre 30 et 40mm).

La figure 6 illustre une variante de réalisation dans laquelle l'élément unitaire de radioprotection 121b est également en forme générale de sphère ; mais ici, la sphère 121b comprend des rainures d'allègement et de passage d'air 121b1, 121b2.

Sur la sphère 121b, les rainures d'allègement et de passage d'air comportent différentes orientations. Plus particulièrement, plusieurs premières rainures d'allègement et de passage d'air 121b1 sont orientées selon une première direction, et plusieurs secondes rainures d'allègement et de passage d'air 121b2 sont orientées selon une seconde direction.
Les premières rainures 121b1 s'étendent parallèlement entre elles sensiblement sur la moitié du volume de la sphère 121b (c'est-à-dire sur une demi-sphère) ; et les secondes rainures 121b2 s'étendent parallèlement entre elles sensiblement sur l'autre moitié du volume de la sphère 121b (c'est-à-dire également sur une demi-sphère).
Les première et seconde directions de rainures s'étendent de manière perpendiculaire entre elles.

Le nombre et la largeur des rainures sur chaque sphère est adapté en fonction de la radioprotection et des passages d'air recherchés.

Ici encore, le diamètre de la sphère 121b est avantageusement compris entre 5 et 60mm, de préférence entre 10 et 50mm (par exemple son diamètre est compris entre 30 et 40mm).

La présence de rainures permet de diminuer le poids de l'élément unitaire de radioprotection, d'augmenter la surface de contact avec l'environnement et d'optimiser le passage d'air.

La figure 7 illustre encore une variante de réalisation dans laquelle l'élément unitaire de radioprotection 121c ne se présente pas sous la forme d'une sphère, mais s'inscrit dans un volume sphérique et comprend une pluralité de bras 121c1 (ici au nombre de 8) qui s'étendent radialement et qui sont régulièrement répartis.

De préférence, les bras 121c1 de l'élément unitaire de radioprotection 121c ont une longueur identique ; le nombre de ces bras 121c1 est de préférence compris entre 3 et 10.

De préférence encore, le diamètre du volume sphérique dans lequel s'inscrit l'élément unitaire 121c est compris entre 5 et 60mm, de préférence entre 10 et 50mm (par exemple son diamètre du volume sphérique correspondant est compris entre 30 et 40mm).

Là encore, une telle structure permet d'alléger l'élément unitaire de radioprotection 211c par rapport à son équivalent sphérique ; la surface de contact avec l'environnement est augmentée et on optimise le passage d'air.

D'autres formes d'éléments unitaires de radioprotection 121 peuvent être envisagées.

Les éléments unitaires de radioprotection 121 sont réalisés en un matériau radio-atténuateur adapté au type de rayonnement ionisant en présence.

Par exemple, en présence d'un rayonnement de type gamma, les éléments unitaires de radioprotection 121 peuvent être réalisés avec des matériaux de densité supérieure à 2,5, par exemple en acier, fonte ou résine chargée.

D'autre part, en présence d'un rayonnement neutronique, les éléments unitaires de radioprotection 121 sont réalisés en matériau neutrophage, apte à absorber les neutrons.
Dans ce cas on peut utiliser un matériau de base fortement hydrogéné, tel que le polyéthylène, une silicone ou une résine polyester, éventuellement chargé au moins d'un composant ignifuge tel que du bore ou de l'hydrate d'aluminium.

Les éléments unitaires de radioprotection 121 sont de préférence réalisés par moulage, mais d'autres techniques telles que l'estampage peuvent être utilisées.

La traversée de ventilation 1 peut être fabriquée en fermant l'une des extrémités de la structure tubulaire 11 au moyen d'une grille de retenue 113. On positionne ensuite la structure tubulaire 11 avec son axe vertical ; on la remplit (ou on la comble) par la pluralité d'éléments unitaire de radioprotection 121 indépendants (généralement plusieurs milliers) ; et on finalise le cloisonnement par l'autre grille de retenue 113.
Les éléments unitaire de radioprotection 121 sont alors maintenus en contact les uns avec les autres (ou en appui les uns sur les autres) par les deux grilles de retenue 113, avec des interstices entre eux pour le passage de l'air.

On comprend que les éléments unitaire de radioprotection 121 restent indépendants les uns des autres. Ils remplissent simplement (ou comblent) leur structure de cloisonnement (formée de la structure tubulaire 11 et des deux grilles de retenue 113), mais ils ne sont pas solidarisés les uns avec les autres ni avec leur structure de cloisonnement.

La pose sur le site est réalisée en utilisant les techniques classiques de génie civil.

## Revendications

1. Traversée de ventilation (1) pour une paroi radio-protectrice (2) assurant une protection contre les rayonnements ionisants, laquelle paroi radio-protectrice (2) est destinée à séparer un espace soumis à des rayonnements ionisants, dit espace chaud (A), et un espace non soumis à des rayonnements ionisants, dit espace froid (B),
laquelle traversée de ventilation (1) comprend :
- une structure tubulaire (11) comprenant une virole (111) munie de deux extrémités de virole (1111, 1112) définissant entre elles une longueur de virole (L) et un volume interne de virole (V), l'une desdites deux extrémités de virole (1111) étant destinée à déboucher dans ledit espace chaud (A), et l'autre desdites deux extrémités de virole (1112) étant destinée à déboucher dans ledit espace froid B, et
- une structure de radioprotection (12) rapportée dans ledit volume interne de virole (V), laquelle structure de radioprotection est adaptée pour stopper une partie au moins desdits rayonnements ionisants tout en autorisant une communication aéraulique entre lesdites deux extrémités de virole (1111, 1112),
ladite structure de radioprotection (12) comprend une pluralité d'éléments unitaires de radioprotection (121) juxtaposés les uns aux autres, et en contact les uns avec les autres, tout en préservant entre eux des interstices pour le passage d'air, laquelle pluralité d'éléments unitaires de radioprotection (121) s'étend sur le volume d'au moins une partie de ladite longueur de virole (L),
ladite structure tubulaire (11) comprend deux grilles de retenue (113) pour le cloisonnement et le maintien des éléments unitaires de radioprotection (121) juxtaposés dans le volume interne de virole (V).

2. Traversée de ventilation (1) selon la revendication 1, **caractérisée en ce que** lesdites grilles de retenue (113) sont disposées au niveau des deux extrémités de virole (1111, 1112), et **en ce que** lesdits éléments unitaires de radioprotection (121) juxtaposés occupent la totalité ou approximativement la totalité dudit volume interne de virole (V).

3. Traversée de ventilation (1) selon la revendication 2, **caractérisée en ce que** ladite structure tubulaire (11) comprend deux couronnes support (112), chacune fixée au niveau de l'une desdites extrémités de virole (1111, 1112), et des moyens (116, 1131, 1125) pour la fixation amovible de chacune desdites grilles de retenue (113) sur l'une desdites couronnes support (112).

4. Traversée de ventilation (1) selon l'une quelconque des revendications 1 à 3, **caractérisée en ce que** la virole (111) de ladite structure tubulaire (11) est non cylindrique comprenant des variations de forme et/ou de dimensions entre lesdites deux extrémités de virole (1111, 1112).

5. Traversée de ventilation (1) selon la revendication 4, **caractérisée en ce que** ladite virole (111) est constituée d'une juxtaposition d'au moins deux tronçons de forme tronconique (111c, 111d, 111e, 111f), de préférence d'une juxtaposition d'au moins trois tronçons de forme tronconique (111c, 111d, 111e, 111f), et encore de préférence d'une juxtaposition d'au moins quatre tronçons de forme tronconique (111c, 111d, 111e, 111f).

6. Traversée de ventilation (1) selon l'une quelconque des revendications 1 à 5, **caractérisée en ce que** certains au moins desdits éléments unitaires de radioprotection (121, 121a, 121b, 121c) ont une forme générale sphérique, ou s'inscrivent dans un volume sphérique, dont le diamètre de sphère est compris entre 5 et 60 mm, de préférence entre 10 et 50 mm.

7. Traversée de ventilation (1) selon l'une quelconque des revendications 1 à 6, **caractérisée en ce que** certains au moins desdits éléments unitaires de radioprotection (121, 121a, 121b) se présentent sous la forme générale d'une sphère munie de rainures d'allègement et de passage d'air (121b1, 121b2).

8. Traversée de ventilation (1) selon la revendication 7, **caractérisée en ce que** lesdites rainures d'allègement et de passage d'air (121b1, 121b2) s'étendent selon différentes orientations sur chaque élément unitaire de radioprotection (121).

9. Traversée de ventilation (1) selon l'une quelconque des revendications 7 ou 8, **caractérisée en ce que** certains au moins desdits éléments unitaires de radioprotection (121) comportent une pluralité de premières rainures d'allègement et de passage d'air (121b1) orientées selon une première direction et une pluralité de secondes rainures d'allègement et de passage d'air (121b2) orientées selon une seconde direction, ladite première direction et ladite seconde direction étant perpendiculaires entre elles.

10. Traversée de ventilation (1) selon l'une quelconque des revendications 1 à 6, **caractérisée en ce que** certains au moins desdits éléments unitaires de radioprotection (121, 121c) sont de forme non sphérique, munis d'une pluralité de bras (121c1) s'étendant radialement et régulièrement répartis.

11. Traversée de ventilation (1) selon l'une quelconque des revendications 1 à 10, **caractérisée en ce que** lesdits éléments unitaires de radioprotection (121) sont réalisés en matériau neutrophage, apte à absorber les neutrons, par exemple en un matériau fortement hydrogéné, tel que le polyéthylène, une silicone ou une résine polyester, éventuellement chargé au moins d'un composant ignifuge tel que du bore ou de l'hydrate d'aluminium.

12. Paroi radio-protectrice (2) séparant un espace soumis à des rayonnements ionisants, dit espace chaud (A), et un espace non soumis à des rayonnements ionisants, dit espace froid (B), comprenant au moins une traversée de ventilation (1) selon l'une quelconque des revendications 1 à 11.

## Patentansprüche

1. Lüftungsdurchführung (1) für eine Strahlenschutzwand (2), die einen Schutz gegen ionisierende Strahlungen sicherstellt, welch selbige Strahlenschutzwand (2) dazu bestimmt ist, einen ionisierenden Strahlen ausgesetzten Raum, als heißer Raum (A) bezeichnet, von einem keinen ionisierenden Strahlen ausgesetzten Raum, als kalter Raum (B) bezeichnet, zu trennen,
welch selbige Lüftungsdurchführung (1)
- eine röhrenartige Struktur (11) mit einem Mantel (111), der mit zwei Mantelenden (1111, 1112) versehenen ist, die zwischen sich eine Mantellänge (L) und ein Mantelinnenvolumen (V) definieren, wobei eins (1111) der beiden Mantelenden dazu bestimmt ist, in den heißen Raum (A) zu münden, und das andere (1112) der beiden Mantelenden dazu bestimmt ist, in den kalten Raum (B) zu münden, und
- eine in das Mantelinnenvolumen (V) eingebrachte Strahlenschutzstruktur (12), welch selbige Strahlenschutzstruktur dazu ausgelegt ist, mindestens einen Teil der ionisierenden Strahlen zu stoppen und dabei eine Luftverbindung zwischen den beiden Mantelenden (1111, 1112) zu ermöglichen,
aufweist,
welch selbige Strahlenschutzstruktur (12) eine Anzahl einzelner, nebeneinander angeordneter und miteinander in Kontakt stehender, jedoch zwischen sich Lücken für das Durchfließen von Luft bewahrender Strahlenschutzelemente (121) aufweist, welch selbige Anzahl einzelner Strahlenschutzelemente (121) sich in dem Volumen mindestens eines Teils der Mantellänge (L) erstreckt,
welch selbige röhrenartige Struktur (11) zwei Rückhaltegitter (113) für das Abschotten und das Rückhalten der nebeneinander angeordneten einzelnen Strahlenschutzelemente (121) im Mantelinnenvolumen (V) aufweist.

2. Lüftungsdurchführung (1) gemäß Anspruch 1, **dadurch gekennzeichnet, daß** die Rückhaltegitter (113) in Höhe der beiden Mantelenden (1111, 1112) angeordnet sind und daß die nebeneinander angeordneten einzelnen Strahlenschutzelemente (121) die Gesamtheit oder nahezu die Gesamtheit des Mantelinnenvolumens (V) ausfüllen.

3. Lüftungsdurchführung (1) gemäß Anspruch 2, **dadurch gekennzeichnet, daß** die röhrenförmige Struktur (11) zwei Stützkränze (112), die jeweils in Höhe der Mantelenden (1111, 1112) befestigt sind, und Mittel (116, 1131, 1125) für die lösbare Befestigung jedes der Rückhaltegitter (113) an einem der Stützkränze (112) aufweist.

4. Lüftungsdurchführung (1) gemäß einem der Ansprüche 1 bis 3, **dadurch gekennzeichnet, daß** der Mantel (111) der röhrenförmigen Struktur (11) nicht zylindrisch ist und Variationen der Form und/oder der Abmessungen zwischen den Mantelenden (1111, 1112) aufweist.

5. Lüftungsdurchführung (1) gemäß Anspruch 4, **dadurch gekennzeichnet, daß** der Mantel (111) aus einem Nebeneinander mindestens zweier kegelstumpfartiger Abschnitte (111c, 111d, 111e, 111f), vorzugsweise aus einem Nebeneinander mindestens dreier kegelstumpfartiger Abschnitte (111c, 111d, 111e, 111f) und noch mehr bevorzugt aus einem Nebeneinander mindestens vierer kegelstumpfartiger Abschnitte (111c, 111d, 111e, 111f) gebildet ist.

6. Lüftungsdurchführung (1) gemäß einem der Ansprüche 1 bis 5, **dadurch gekennzeichnet, daß** mindestens gewisse der einzelnen Strahlenschutzelemente (121, 121a, 121b, 121c) eine allgemeine kugelartige Form haben oder in ein kugelartiges Volumen passen, dessen Kugeldurchmesser zwischen 5 und 60 mm, vorzugsweise zwischen 10 und 50 mm, beträgt.

7. Lüftungsdurchführung (1) gemäß einem der Ansprüche 1 bis 6, **dadurch gekennzeichnet, daß** mindestens gewisse der einzelnen Strahlenschutzelemente (121, 121a, 121b) die allgemeine Form einer Kugel haben, die mit Rillen (121b1, 121b2) zur Gewichtsreduzierung und für den Durchlaß von Luft versehen ist.

8. Lüftungsdurchführung (1) gemäß Anspruch 7, **dadurch gekennzeichnet, daß** sich die Rillen (121b1, 121b2) zur Gewichtsreduzierung und für den Durchlaß von Luft auf jedem einzelnen Strahlenschutzelement (121) in verschiedenen Richtungen erstrecken.

9. Lüftungsdurchführung (1) gemäß einem der Ansprüche 7 oder 8, **dadurch gekennzeichnet, daß** mindestens gewisse der einzelnen Strahlenschutzelemente (121) eine Anzahl erster, in einer ersten Richtung ausgerichteter Rillen (121b1) zur Gewichtsreduzierung und für den Durchlaß von Luft und eine Anzahl zweiter, in einer zweiten Richtung ausgerichteter Rillen (121b2) zur Gewichtsreduzierung und für den Durchlaß von Luft aufweisen, wobei die erste Richtung und die zweiter Richtung zueinander senkrecht stehen.

10. Lüftungsdurchführung (1) gemäß einem der Ansprüche 1 bis 6, **dadurch gekennzeichnet, daß** mindestens gewisse der einzelnen Strahlungsschutzelemente (121, 121c) eine nicht kugelartige Form haben und mit einer Anzahl sich radial erstreckender und gleichmäßig verteilter Arme (121c1) versehen sind.

11. Lüftungsdurchführung (1) gemäß einem der Ansprüche 1 bis 10, **dadurch gekennzeichnet, daß** die einzelnen Strahlenschutzelemente (121) aus Neutronen absorbierendem Material gefertigt sind, das fähig ist, die Neutronen zu absorbieren, zum Beispiel aus einem stark hydrierten Material, wie zum Beispiel Polyäthylen, ein Silikon oder ein Polyesterharz, eventuell mit einer flammenhemmenden Komponente wie etwa Bor oder Aluminiumhydrat.

12. Strahlenschutzwand (2), die einen ionisierenden Strahlen ausgesetzten Raum, als heißer Raum (A) bezeichnet, von einem keinen ionisierenden Strahlen ausgesetzten Raum, als kalter Raum (B) bezeichnet, trennt, mit mindestens einer Lüftungsdurchführung (1) gemäß einem der Ansprüche 1 bis 11.

## Claims

1. A ventilation penetration (1) for a radiation-shielding wall (2) providing protection against ionising radiations, which radiation-shielding wall (2) is intended to separate a space subjected to ionising radiations, referred to as a hot space (A), and a space not subjected to ionising radiations, referred to as a cold space (B),
wherein the ventilation penetration (1) comprises:
- a tubular structure (11) comprising a shell (111) provided with two shell ends (1111, 1112) defining a shell length (L) and an inner shell volume (V) therebetween, one of said two shell ends (1111) being intended to open into said hot space (A), and the other of said two shell ends (1112) being intended to open into said cold space B, and
- a radiation-shielding structure (12) inserted into said inner shell volume (V), which radiation-shielding structure is adapted to stop at least part of said ionising radiations while allowing aeraulic communication between said two shell ends (1111, 1112),
said radiation-shielding structure (12) comprises a plurality of unitary radiation-shielding elements (121) juxtaposed to one another, and in contact with one another, while preserving gaps therebetween for air passage, which plurality of unitary radiation-shielding elements (121) extends over the volume of at least a part of said shell length (L),
said tubular structure (11) comprises two retaining grids (113) for partitioning and holding the unitary radiation-shielding elements (121) juxtaposed in the inner shell volume (V).

2. The ventilation penetration (1) according to claim 1, **characterised in that** said retaining grids (113) are disposed at the two shell ends (1111, 1112), and **in that** said juxtaposed unitary radiation-shielding elements (121) occupy the all or approximately all of said inner shell volume (V).

3. The ventilation penetration (1) according to claim 2, **characterised in that** said tubular structure (11) comprises two support rings (112), each attached at one of said shell ends (1111, 1112), and means (116, 1131, 1125) for removably attaching each of said retaining grids (113) to one of said support rings (112).

4. The ventilation penetration (1) according to any one of claims 1 to 3, **characterised in that** the shell (111) of said tubular structure (11) is non-cylindrical, comprising variations in shape and/or dimensions between said two shell ends (1111, 1112).

5. The ventilation penetration (1) according to claim 4, **characterised in that** said shell (111) consists of a juxtaposition of at least two frustoconical sections (111c, 111d, 111e, 111f), preferably a juxtaposition of at least three frustoconical sections (111c, 111d, 111e, 111f), and even more preferably a juxtaposition of at least four frustoconical sections (111c, 111d, 111e, 111f).

6. The ventilation penetration (1) according to any one of claims 1 to 5, **characterised in that** at least some of said unitary radiation-shielding elements (121, 121a, 121b, 121c) generally have a spherical shape, or fit into a spherical volume, the sphere diameter of which is between 5 and 60 mm, preferably between 10 and 50 mm.

7. The ventilation penetration (1) according to any one of claims 1 to 6, **characterised in that** at least some of said unitary radiation-shielding elements (121, 121a, 121b) generally have a sphere shape provided with lightening and air passage grooves (121b1, 121b2).

8. The ventilation penetration (1) according to claim 7, **characterised in that** said lightening and air passage grooves (121b1, 121b2) extend along different orientations on each unitary radiation-shielding element (121).

9. The ventilation penetration (1) according to any one of claims 7 or 8, **characterised in that** at least some of said unitary radiation-shielding elements (121) include a plurality of first lightening and air passage grooves (121b1) oriented along a first direction and a plurality of second lightening and air passage grooves (121b2) oriented along a second direction, said first direction and said second direction being perpendicular to each other.

10. The ventilation penetration (1) according to any one of claims 1 to 6, **characterised in that** at least some of said unitary radiation-shielding elements (121, 121c) are non-spherical in shape, provided with a plurality of radially extending and evenly distributed arms (121c1).

11. The ventilation penetration (1) according to any one of claims 1 to 10, **characterised in that** said unitary radiation-shielding elements (121) are made of neutron-absorbing material, capable of absorbing neutrons, for example of a highly hydrogenated material, such as polyethylene, silicone or polyester resin, optionally filled with at least one fire-retardant component such as boron or aluminium hydrate.

12. A radiation-shielding wall (2) separating a space subjected to ionising radiations, referred to as hot space (A), and a space not subjected to ionising radiations, referred to as cold space (B), comprising at least one ventilation penetration (1) according to any one of claims 1 to 11.
